# EUROPEAN PATENT SPECIFICATION

(11) **EP 0 656 324 B1**
(45) Date of publication and mention of the grant of the patent: **03.11.1999**
(21) Application number: 94830536.2
(22) Date of filing: 17.11.1994
(51) Int. Cl.: C03B 18/02, C03B 25/093, C03B 35/24

(54) **A process and device for the manufacture of flat glass sheet with improved characteristics**
Verfahren und Vorrichtung zur Herstellung von Flachglasscheiben mit verbesserten Eigenschaften
Procédé et dispositif pour la fabrication de feuilles de verre planes ayant des caractéristiques améliorées

(30) Priority: 30.11.1993 IT RM930797
(43) Date of publication of application: 07.06.1995
(73) Proprietor: SOCIETA' ITALIANA VETRO - SIV - S.p.A., 66050 San Salvo (CH) (IT)
(72) Inventor: Marique, Jean Claude, B-5600 Sambreville (BE); Boattini, Pier Paolo, I-66050 San Salvo CH (IT)
(74) Representative: Bazzichelli, Alfredo

(56) References cited:
- WO-A-92/16466
- DE-A- 1 807 582
- GB-A- 1 197 258
- GB-A- 1 555 359
- GB-A- 1 555 360
- US-A- 3 506 422
- US-A- 4 081 260
- SOVIET INVENTIONS ILLUSTRATED Section Ch, Week 8311 27 April 1983 Derwent Publications Ltd., London, GB; Class L01, AN 83-26827K & SU-A-556 592 (SARAT CONS GLASS) , 7 September 1982
- SOVIET INVENTIONS ILLUSTRATED Section Ch, Week 8318 15 June 1983 Derwent Publications Ltd., London, GB; Class L01, AN 83-43398K & SU-A-230 393 (SARAT GLASS RES INS) , 30 August 1982

## Description

The present invention relates to a process and a device for the manufacture of flat glass sheets with improved optical and mechanical characteristics.

In particular, it relates to an improvement in the transfer operation of the glass sheet strip from the molten metal tin bath to a roller annealing lehr within the manufacturing process of flat glass sheets using the "float" method, known by the state of the art; furthermore, it also relates to a device for carrying out said improvement.

It is a known fact that flat glass sheets are manufactured in plants providing a first stage in which the raw materials are melted and a subsequent stage in which the glass sheet is formed by floating and sliding the molten material on a tin bath.

These plants, known by the state of the art as float plants, provide an annealing lehr downstream of the of molten tin bath, in order to provide the glass sheet strip with the required mechanical characteristics.

The PCT patent application No. 92/16466 filed by the GLASSTECH company describes a float plant equipped with an annealing lehr in which the glass sheet strip travels while being supported on fluid bed.

US-A-3,506,422 describes a method and apparatus for forming a flat glass on a fluid support bed in which a ribbon of glass is continously lifted from a supporting molten metal bath onto a gaseous cushion on which the ribbon is conveyed and conditioned in its temperature before reaching an annealing lehr so as to avoid damage to its soft undersurface.

The aim of this device is to provide an annealing process in which the glass sheet strip does not come into contact with the rollers, as is the case in the conventional method, in order to improve the optical and mechanical characteristics of the glass surface itself, being in this stage still at a high temperature, can undergo damage when in contact with rollers.

The main inconvenience with the above described device consists in the fact that it is necessary to carry out expensive modifications to the existing systems, as the integral replacement of the annealing lehr, which is several dozen meters long becomes necessary.

Another inconvenience lies in the fact that when manufacturing a new float plant, the realization of an annealing lehr having an entirely fluid bed requires high investments; furthermore the process control is more difficult.

The aim of the present invention is to overcome the above mentioned problems.

It has been surprisingly found that an identical improvement in the optical and mechanical characteristics of the glass sheet strip surface is obtained by placing between the tin bath and the traditional annealing lehr entrance, equipped with conveying rollers, a device that generates a fluid bed which serves to cool the strip of glass sheet strip and to support it adequately as it travels towards the next roller annealing lehr.

An object of the present invention is therefore a process for manufacture of flat glass sheets with improved optical and mechanical properties, including melting a raw material in a furnace, forming a glass sheet strip in a bath of molten metal tin, conveying said glass sheet strip from said molten tin bath in a direction of travel by on annealing lehr provided with rollers, and pre-cooling said glass sheet strip while supported by a fluid bed at a stage of travel between said bath of molten tin and said roller annealing lehr, characterized by the steps of
forming said fluid bed by two different mixtures of gases in succession to the travel direction of the glass strip, and emitting said mixtures of gas by a first module of said fluid bed and by a second module of said fluid bed, said first and second modules being adjacent
in said succession but not in fluid communication with each other.

This process reinforces the surfaces of the glass, preventing it from being damaged by next contact with the rollers, and allowing the next annealing operation to be performed in a conventional roller lehr without the danger of damaging the surface of the glass and the reduction of optical features.

The fluid bed is formed by a suitable mixture of gasses, at a controlled temperature and flow rate, in order to allow the glass sheet strip to reach the entrance to the roller annealing lehr at a chosen temperature, preferably not exceeding approximately 570°C (+/- 10°C), whatever the temperature of the glass upon exiting the tin bath.

It is preferred that the temperature of the glass upon entering the device according to the present invention be between 650°C and 600°C, according to the thickness of the glass and the speed at which it is conveyed, so that the thermal head from 600 - 650°C upon entering the pre-cooling stage and 570°C upon leaving it can be obtained and controlled through the temperature and flow rate of the gasses in the fluid bed.

The annealing of the glass sheet strip by the gradual lowering of the temperature from approximately 570°C to approximately 495°C is then performed as usual in the annealing lehr equipped with rollers.

Preferably, the mixture of gasses emitted by the first module is a mixture of hydrogen and nitrogen, in which the hydrogen is included in an amount of between 4 and 8% of the nitrogen; and the second module provides a mixture of air and SO2, in which the SO2 is present in a percentage ranging between 10 and 12% with respect to the air.

Advantageously the process can also be used to deposit thin layers on one or both the surfaces of the glass. In this case the mixture of gasses emitted by the second module is a mixture of air and organic metal elements (for example Ti, Fe, Sn, Sb, Co, Zn, Zr, Si, etc.) suitably prepared for chemical vapour phase deposition.

Furthermore the process can also be advantageously used to improve cohesion between the substrate and the thin layer, by providing for emission of suitably chosen mixed gasses (for example in this case a mixture of fluorine and sulphur dioxide will be used in the first part, and a mixture of air and organic metal elements in the second part).

The invention also provides a device according to claim 7.

Preferably the nozzles are divided into groups whose flow rate can be independently adjusted so as to adapt to the different sizes and flatness of the strip of glass.

In other words, the process and the device described above and forming the object of the present invention allow a number of technical problems to be solved simultaneously: improvement of the optical and mechanical characteristics of the glass surface, thin layers deposition, cohesion improvement between the surface of the substrate and the thin layers deposited thereon, while also giving the advantage of notably reducing installation costs, as it is only necessary to install a single, multi-purpose device.

All the above is possible thanks to the fact that the fluid bed device in question is installed in the area between the tin bath and the annealing lehr.

Additional characteristics and details of the invention will be provided with the aid of the following drawings, given merely as non-limiting examples, in which a preferred embodiment of the device realized according to the present invention is shown, and in which:
figure 1 is a vertical section view of the device in accordance with the present invention;
figure 2 is a vertical cross-section view of the device in accordance with the present invention; and
figure 3 is a vertical section view of the blowing nozzle.

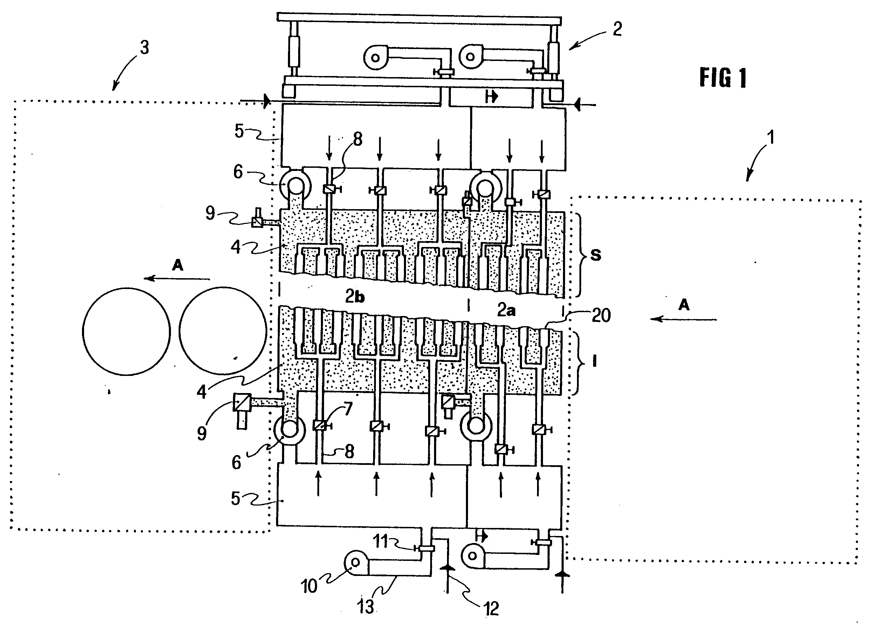

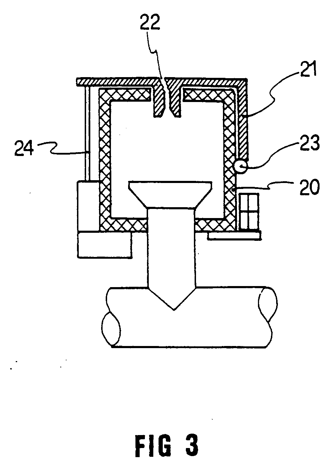

With reference to figures 1 to 3 and according to the present invention, the fluid bed device 2 in conformity with the invention is positioned between the tin bath 1 and the roller annealing lehr 3, where the travel direction of the glass sheet strip is indicated by the arrow A.

The fluid bed device 2, according to figure 1, is made up of two sections: the section closest to the tin bath 1 is indicated with 2a, and has a length not exceeding 500 millimeters; the following section 2b has a length not exceeding 1000 millimeters.

The fluid bed device is divided into two sections so that it can operate with different mixtures, and in addition, in case of malfunction in one of the two sections, to enable the faulty section to be removed, while continuing to work with the other one.

The existence of two modules, one above S and one below I compared to the travelling level of the glass strip, makes it possible to intervene using suitable mixtures, at suitable temperatures, on both sides of the glass strip V.

Each module has a tank 4 for re-circulation of the mixture and a tank 5 for preparation of the air-gas mixture and distribution of the mixture through the conduits 8.

The re-circulation fans 6 cause the mixture to flow from the re-circulation tank 4 to the preparation tank 5.

Each conduit 8 has an adjustment valve 7 to adjust the flow rate of the gasses in the fluid bed.

A temperature adjuster 9 is positioned between the re-circulation tank 4 and the distribution tank 5 to maintain the temperature of the fluid at the desired level, in order to control the thermal gradient of the glass sheet strip during its travel from the tin bath to the annealing lehr 3.

A fan 10, connected by conduit 13 to a valve 11 and a tank 5, maintains the flow rate of the fluid at the desired level.

Feeder pipes 12 supply the gas necessary to form the mixture for the fluid bed.

The tanks 5 are supported by jacks 14 resting on plates 15 which in turn rest on jacks 16, so that the group of tanks 4 and 5, which are integral with each other, can be lowered or raised with respect to the level of glass sheet strip, according to need.

As can be seen from figure 1, the fluid bed device seen in cross-section and the fluid bed generated thereby are inclined when compared to the horizontal by an amount preferably comprised between 1.2° and 5°.

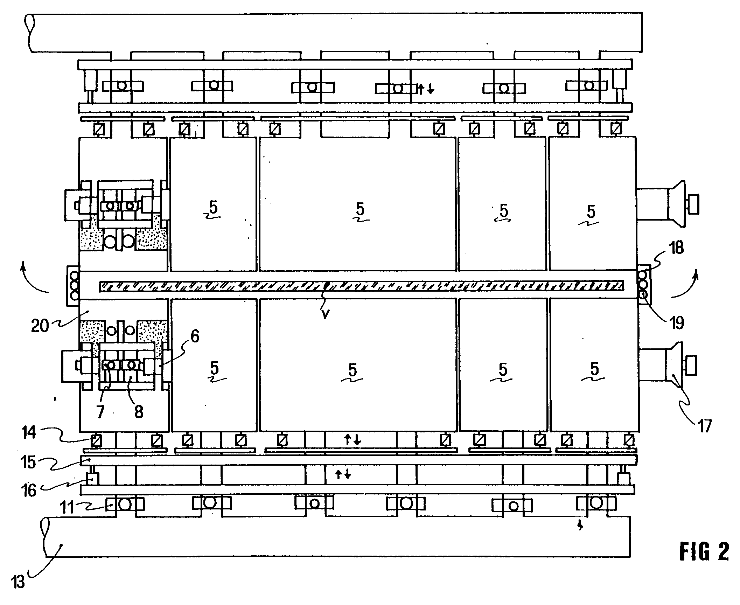

With reference to figure 2, the group of tanks 4 and 5, which are integral with each other, is preferably divided into modules having different widths, which decrease from the center of the glass sheet strip V outward, in order to allow greater flexibility of adjustment in the peripheral areas of the glass strip V, where temperature distribution is less even when compared with the central areas.

Cooling fans 17 are used to maintain the fans 6 re-cycling the fluid bed at a constant temperature.

The sides of the fluid bed device are closed by using moving doors 18 provided with heating elements 19 to compensate any heat loss at the edges.

The nozzles generating the fluid bed are shaped so that they allow the glass strip V to be supported on one side, and optional chemical vapour phase deposition of metal oxides to form thin layers on the other side.

In particular, distribution of the mixture takes place by means of the nozzles 20. These nozzles are arranged in the module I below and the module S above the glass sheet strip, so that deposition can take place on the upper or lower surface of the strip of glass.

Each of these nozzles has a coating 21 of refractory material, in which the shape of the slot 22 for emission of the gaseous mixture is formed.

Said slot 22 is inclined in the same direction as the direction of movement of the glass sheet strip, in order to reduce gas turbulence to a minimum and thus allow the best possible conditions for chemical deposition of thin layers.

The block of refractory material 21 is in turn hinged around hinge 23 and undergoes the thrust of a piston 24. This piston, according to requirements, alters the inclination of the refractory material block, and thus of the slot 22, with respect to the horizontal.

## Claims

1. A process for manufacture of flat glass sheets with improved optical and mechanical properties, including melting raw materials in a furnace, forming a glass sheet strip on a bath of molten tin (1), conveying said glass sheet strip (V) from said molten tin bath in a direction of travel (A) to an annealing lehr (3) provided with rollers, and pre-cooling said glass sheet strip while supported by a fluid bed at a stage of travel between said bath of molten tin and said roller annealing lehr, thereby controllably lowering the glass temperature itself by the cooling and supporting action of mixtures of gasses, characterized by the steps of
forming said fluid bed by two different mixtures of gases emitted by a first module (2a) of said fluid bed and by a second module (2b) of said fluid bed, said first and second modules being located adjacent to each other in the direction of travel but not in fluid communication with each other.

2. A process according to claim 1, in which the two different mixtures of gasses are each emitted below and above the glass sheet strip (V).

3. A process according to claim 1 or claim 2, characterized by the fact that during said pre-cooling stage the temperature of the glass strip (V) is reduced from a level of between 650 and 600°C to a level of between 580 and 560°C over a distance of approximately 1500 mm.

4. A process according to any of claims 1 to 3, characterized by the fact that the first mixture of gasses emitted by the first module (2a) is made up of nitrogen and of an amount of between 4 and 8% hydrogen; the second mixture of gasses emitted by the second module (2b) is made up of air and of an amount of between 10 and 12% sulphur dioxide.

5. A process according to any of claims 1 to 3, characterized by the fact that the first mixture of gasses emitted by the first module (2a) is made up of nitrogen and of an amount of between 4 and 8% hydrogen, and the second mixture of gasses emitted by the second module (2b) is made up of air and organic metal elements for chemical vapour phase deposition of thin layers on one or both surfaces of the glass strip (V).

6. A process according to any of claims 1 to 3, characterized by the fact that the first mixture of gasses emitted by the first module (2a) is made up of fluorine and sulphur dioxide, and the second mixture of gasses emitted by the second module (2b) is made up of air and organic metal elements to improve cohesion between substrate and thin layers.

7. A device for the realization of a process as claimed in any of the preceding claims 2 to 6, characterized by the fact that it comprises
a furnace for melting raw materials, a bath of molten tin (1) for forming a glass sheet strip (V), an annealing lehr (3) provided with rollers for conveying said glass sheet strip and a fluid bed device (2) between said bath of molten tin and said roller annealing lehr for supporting and pre-cooling said glass sheet strip (V) with mixtures of gasses, characterized in that fluid bed device comprises, in the direction of travel (A) of the glass sheet strip, a first module (2a) with a length not exceeding 500 mm and a second module (2b) having a length not exceeding 1000 mm, both said modules comprising groups of blowing nozzles (20) forming the fluid bed and arranged above (S) and below (I) said glass strip (V) and inclined with respect to the horizontal by an angle of between 1.2° and 5°, and means to provide the first and second module with different mixtures of gasses.

8. A device according to claim 7, characterized by the fact that it comprises adjacent, separate blowing tanks (5) of different widths arranged transversally to the direction of travel (A) of the glass strip (V), the tanks arranged at the edge of the strip having a smaller width than those in the center.

9. A device according to claim 7 or 8, characterized by the fact that each blowing nozzle (20) has a slot (22) for emission of the gasses in the fluid bed, said slot being inclined in the direction of travel (A) of the glass in order to eliminate turbulence in the gasses of the fluid bed and improve the conditions for deposition of thin layers.

10. A device according to claim 9, in which each blowing nozzle (20) is provided with a coat of refractory material (21) having the same shape as the nozzle (20) and free to rotate about a hinge (23) fixed to said nozzle, so that the inclination of said coat can be adjusted with respect to the horizontal plane.

## Patentansprüche

1. Verfahren zum Herstellen von Flachglasscheiben mit verbesserten optischen und mechanischen Eigenschaften, das das Schmelzen von Ausgangsmaterialien in einem Ofen, das Formen eines Glasscheibenbandes auf einem Bad aus geschmolzenem Zinn (1), den Transport des Glasscheibenbandes (V) von dem Bad aus geschmolzenem Zinn in einer Bewegungsrichtung (A) zu einem Kühlofen (3), der mit Walzen versehen ist, und das Vorkühlen des Glasscheibenbandes während es von einem Fluidbett getragen wird, in einem Stadium der Bewegung zwischen dem Bad aus geschmolzenem Zinn und dem Walzen-Kühlofen, um so die Glastemperatur selbst durch die kühlende und tragende Wirkung von Gemischen von Gasen gesteuert zu senken, einschließt, **gekennzeichnet durch** die Schritte des Ausbildens des Fluidbettes mit zwei verschiedenen Gemischen von Gasen, die von einem ersten Modul (2a) des Fluidbettes und von einem zweiten Modul (2b) des Fluidbettes emittiert werden, wobei der erste und der zweite Modul in der Bewegungsrichtung aneinander angrenzend angeordnet sind, jedoch nicht in Fluidverbindung miteinander stehen.

2. Verfahren nach Anspruch 1, bei dem die beiden verschiedenen Gemische von Gasen jeweils unter und über dem Glasscheibenband (V) emittiert werden.

3. Verfahren nach Anspruch 1 oder Anspruch 2, **gekennzeichnet durch** die Tatsache, daß während des Vorkühlstadiums die Temperatur des Glasbandes (V) über eine Strecke von ungefähr 1500 mm von einem Pegel zwischen 650 und 600°C auf einen Pegel zwischen 580 und 560°C reduziert wird.

4. Verfahren nach einem der Ansprüche 1 bis 3, **gekennzeichnet durch** die Tatsache, daß das erste Gemisch von Gasen, das von dem ersten Modul (2a) emittiert wird, aus Stickstoff und einem Wasserstoffanteil zwischen 4 und 8% besteht, wobei das zweite Gemisch von Gasen, das von dem zweiten Modul (2b) emittiert wird, aus Luft und einem Schwefeldioxidanteil zwischen 10 und 12% besteht.

5. Verfahren nach einem der Ansprüche 1 bis 3, **gekennzeichnet durch** die Tatsache, daß das erste Gemisch von Gasen, das von dem ersten Modul (2a) emittiert wird, aus Stickstoff und einem Wasserstoffanteil zwischen 4 und 8% besteht, und das zweite Gemisch von Gasen, das von dem zweiten Modul (2b) emittiert wird, aus Luft und organischen Metallelementen zur chemischen Gasphasenabscheidung dünner Schichten auf einer oder beiden Flächen des Glasbandes (V) besteht.

6. Verfahren nach einem der Ansprüche 1 bis 3, **gekennzeichnet durch** die Tatsache, daß das erste Gemisch von Gasen, das von dem ersten Modul (2a) emittiert wird, aus Fluor und Schwefeldioxid besteht und das zweite Gemisch von Gasen, das von dem zweiten Modul (2b) emittiert wird, aus Luft und organischen Metallelementen besteht, um die Kohäsion zwischen Substrat und Dünnschichten zu verbessern.

7. Vorrichtung zum Ausführen eines Verfahrens nach einem der vorangehenden Ansprüche 2 bis 6, **gekennzeichnet durch** die Tatsache, daß sie umfaßt:
einen Ofen zum Schmelzen von Ausgangsmaterialien, ein Bad aus geschmolzenem Zinn (1) zum Ausbilden eines Glasscheibenbandes (V), einen Kühlofen (3), der mit Walzen versehen ist, um das Glasscheibenband zu transportieren, sowie eine Fluidbettvorrichtung (2) zwischen dem Bad aus geschmolzenem Zinn und dem Walzenkühlofen, die das Glasscheibenband (V) mit Gemischen von Gasen trägt und vorkühlt, **dadurch gekennzeichnet,** daß die Fluidbettvorrichtung in der Bewegungsrichtung (A) des Glasscheibenbandes umfaßt: einen ersten Modul (2a) mit einer Länge nicht über 500 mm und einen zweiten Modul (2b) mit einer Länge nicht über 1000 mm, wobei beide Module Gruppen von Blasdüsen (20) umfassen, die das Fluidbett herstellen und über (S) sowie unter (I) dem Glasband (V) angeordnet und in bezug auf die Horizontale um einen Winkel zwischen 1,2° und 5,0° geneigt sind, sowie eine Einrichtung, die den ersten und den zweiten Modul mit verschiedenen Gemischen von Gasen versorgt.

8. Vorrichtung nach Anspruch 7, **gekennzeichnet durch** die Tatsache, daß sie aneinandergrenzende separate Blastanks (5) unterschiedlicher Breite umfaßt, die quer zur Bewegungsrichtung (A) des Glasbandes (V) angeordnet sind, wobei die Tanks, die am Rand des Bandes angeordnet sind, eine geringere Breite haben als die in der Mitte.

9. Vorrichtung nach Anspruch 7 bzw. 8, **gekennzeichnet durch** die Tatsache, daß jede Blasdüse (20) einen Schlitz (22) zum Austritt der Gase in dem Fluidbett hat, wobei der Schlitz in der Bewegungsrichtung (A) des Glases geneigt ist, um Turbulenz der Gase des Fluidbettes aufzuheben und die Bedingungen für das Auftragen von Dünnschichten zu verbessern.

10. Vorrichtung nach Anspruch 9, wobei jede Blasdüse (20) mit einer Umhüllung aus feuerfestem Material (21) versehen ist, die die gleiche Form hat wie die Düse (20) und sich um ein Gelenk (23) herum drehen kann, das an der Düse befestigt ist, so daß die Neigung der Umhüllung in bezug auf die horizontale Ebene verstellt werden.

## Revendications

1. Procédé pour fabriquer des feuilles de verre planes possédant des propriétés optiques et mécaniques améliorées, incluant la fusion de matières premières dans un four, la formation d'une bande pour feuilles de verre sur un bain d'étain fondu (1), le transport de ladite bande pour feuilles de verre (V) à partir dudit bain d'étain fondu dans une direction de déplacement (A) dans une galerie de recuisson (3) équipée de rouleaux et prérefroidissement de ladite bande pour feuilles de verre alors qu'elle est supportée par un lit fluide à un stade de déplacement entre ledit bain d'étain fondu et ladite galerie de recuisson à rouleaux, ce qui permet de réduire d'une manière commandable la température même du verre au moyen de l'action de refroidissement et de support de mélanges de gaz, caractérisé par les étapes consistant à :
former ledit lit fluide au moyen de deux mélanges différents de gaz émis par un premier module (2a) pour ledit lit de fluide et par un second module (2b) dudit lit de fluide, lesdits premier et second modules étant situés au voisinage l'un de l'autre dans la direction de déplacement, mais sans être en communication fluidique entre eux.

2. Procédé selon la revendication 1, selon lequel les deux mélanges différents de gaz sont émis chacun au-dessous et au-dessus de la bande pour feuilles de verre (V).

3. Procédé selon la revendication 1 ou la revendication 2, caractérisé en ce pendant ladite étape de prérefroidissement, la température de la bande de verre (V) est réduite d'un niveau situé entre 650 et 600°C à un niveau situé entre 580 et 560°C, sur une distance d'environ 1500 mm.

4. Procédé selon l'une quelconque des revendications 1 à 3, caractérisé en ce que le premier mélange de gaz émis par le premier module (2a) est constitué d'azote et d'une quantité comprise entre 4 et 8 % d'hydrogène ; le second mélange de gaz émis par le second module (2b) est constitué d'air et d'une quantité comprise entre 10 et 12 % de dioxyde de soufre.

5. Procédé selon l'une quelconque des revendications 1 à 3, caractérisé en ce que le premier mélange de gaz émis par le premier module (2a) est constitué d'azote et d'une quantité comprise entre 4 et 8 % d'hydrogène, et le second mélange de gaz émis par le second module (2b) est constitué d'air et d'éléments organométalliques pour le dépôt chimique en phase vapeur de couches minces sur l'une des surfaces ou sur les deux surfaces de la bande de verre (V).

6. Procédé selon l'une quelconque des revendications 1 à 3, caractérisé en ce que le premier mélange de gaz émis par le premier module (2a) est constitué de fluor et de dioxyde de soufre et que le second mélange de gaz émis par le second module (2b) est constitué d'air et d'éléments organométalliques pour améliorer la cohésion entre le substrat et les couches minces.

7. Dispositif pour l'exécution d'un procédé selon l'une quelconque des revendications précédentes 2 à 6, caractérisé en ce qu'il comprend :
un four pour la fusion de matières premières, un bain d'étain fondu (1) pour former une bande pour feuilles de verre (V), une galerie de recuisson (3) équipée de rouleaux pour le convoyage de ladite bande pour feuilles de verre et un dispositif à lit de fluide (2) entre ledit bain d'étain fondu et ladite galerie de recuisson à rouleaux pour supporter et prérefroidir ladite bande pour feuilles de verre (V) avec des mélanges de gaz, caractérisé en ce que ledit dispositif à lit de fluide comprend, dans la direction de déplacement (A) de la bande pour feuilles de verre, un premier module (2a) ayant une longueur ne dépassant pas 500 mm et un second module (2b) ayant une longueur ne dépassant pas 1000 mm, lesdits deux modules comprenant des groupes de buses de soufflage (20) formant le lit de fluide et disposées au-dessus (S) et au-dessous (I) de ladite bande de verre (V) et inclinées par rapport à l'horizontale sur un angle compris entre environ 1,2° et 5°, et des moyens pour envoyer des mélanges différents de gaz aux premier et second modules.

8. Dispositif selon la revendication 7, caractérisé en ce qu'il comprend des boîtes adjacentes séparées de soufflage (5) ayant des largeurs différentes et disposées transversalement par rapport à la direction de déplacement (A) de la bande de verre (V), les boîtes disposées au niveau du bord de la bande ayant une largeur inférieure à celles situées au centre.

9. Dispositif selon la revendication 7 ou 8, caractérisé en ce que chaque buse de soufflage (20) comporte une fente (22) pour l'émission des gaz dans le lit de fluide, ladite fente étant inclinée dans la direction de déplacement (A) du verre de manière à éliminer une turbulence dans les gaz du lit de fluide et améliorer les conditions de dépôt de couches minces.

10. Dispositif selon la revendication 9, dans lequel chaque buse de soufflage (20) comporte un revêtement formé d' un matériau réfractaire (21) ayant la même forme que la buse (20) et pouvant librement tourner autour d'une charnière (23) fixée à ladite buse, de sorte que l'inclinaison dudit revêtement peut être réglée par rapport au plan horizontal.
